(19) Europäisches Patentamt
European Patent Office
Office européen des brevets

(11) **EP 4 787 010 A1**

(12) **DEMANDE DE BREVET EUROPEEN**

(43) Date de publication:
**05.08.2026 Bulletin 2026/32**

(21) Numéro de dépôt: **26156046.0**

(22) Date de dépôt: **03.02.2026**

(51) Classification Internationale des Brevets (IPC):
**G01S 5/02** *(2010.01)* **G01S 19/03** *(2010.01)*
**G01S 19/46** *(2010.01)*

(52) Classification Coopérative des Brevets (CPC):
**G01S 5/0289; G01S 19/03; G01S 19/46**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **03.02.2025 FR 2501058**

(71) Demandeur: **THALES**
**92190 Meudon (FR)**

(72) Inventeur: **HEURGUIER, Dominique**
**92622 GENNEVILLIERS CEDEX (FR)**

(74) Mandataire: **Lavoix**
**2, place d'Estienne d'Orves**
**75441 Paris Cedex 09 (FR)**

(54) **MÉTHODE DE POSITIONNEMENT COLLABORATIF GNSS HYBRIDE RADIO**

(57) La présente invention concerne une méthode de positionnement satellitaire mettant en œuvre une pluralité ($M$) de satellites et une pluralité ($N$) de plateformes mobiles connectées, chaque plateforme embarquant un récepteur GNSS ainsi qu'un émetteur/récepteur radio. Après une étape d'initialisation (110-130), la méthode comprend une pluralité d'itérations, chaque itération comprenant une étape de mesure (140) de pseudodistances satellitaires ($\rho_{i,j}^{sat}$) pour chaque satellite que chaque plateforme a en visibilité, ainsi que les pseudodistances radio ($\rho_{i,n}^{rad}$), qui sépare des autres plateformes. Un vecteur d'observation hybride ($Y$) est construit (150) à partir des pseudodistances satellitaires et les pseudodistances radio mesurées par la pluralité des plateformes mobiles. A chaque itération, une estimation du vecteur d'état global est ensuite mise à jour (160) à partir de l'estimation de ce vecteur obtenue à l'itération précédente, du vecteur d'observation hybride ($Y(t)$) construit à l'étape courante et d'une matrice géométrique globale ($H_G$) dépendant des vecteurs directeurs ($u_{i,j}$) des droites joignant chaque plateforme aux que des vecteurs directeurs ($v_{i,n}$) des droites joignant chaque plateforme aux autres plateformes. Les positions des plateformes et/ou les décalages de leurs horloges internes respectives sont donné(e)s par l'estimation du vecteur d'état global obtenue à la dernière itération.

FIG.1

**Description**

**DOMAINE TECHNIQUE**

La présente invention concerne de manière générale le domaine du positionnement et de la navigation GNSS (*Global Navigation Satellite System*), et plus particulièrement le domaine du positionnement GNSS collaboratif. Elle peut notamment être mise en œuvre par un essaim de plateformes mobiles équipées à la fois de récepteurs GNSS et d'émetteurs/récepteurs radio, connectées en réseau de type MANET (*Mobile Ad hoc NETwork*), VANET (*Vehicle Ad hoc NETwork*), ou FANET ( *Flying Ad hoc NETwork*).

**ÉTAT DE LA TECHNIQUE ANTERIEURE**

Les systèmes de positionnement satellitaires GPS, GALILEO, GLONASS, BEIDOU sont bien connus de l'état de la technique sous l'acronyme général GNSS. De manière classique, ces systèmes satellitaires permettent à un récepteur GNSS d'estimer sa position par multilatération à partir de signaux synchronisés reçus d'au moins quatre satellites. Outre sa position, le récepteur GNSS peut estimer sa vitesse et le temps de l'horloge satellitaire, les trois paramètres estimés étant regroupés sous le terme PVT (*Position Velocity Time*).
L'estimation de la position (et plus généralement l'estimation PVT) d'un récepteur GNSS est obtenue à partir des pseudodistances mesurées avec les différents satellites. Les mesures de pseudodistances peuvent être affectées par de nombreuses sources d'erreurs par exemple la dérive de l'horloge satellitaire par rapport à l'horloge de synchronisation du système satellitaire, les erreurs de position des différents satellites, les multitrajets, les erreurs introduites par les retards de propagation du signal satellitaire dans la troposphère et dans l'ionosphère. A ces sources d'erreurs s'ajoute bien entendu le bruit du récepteur.
En outre, les masquages de satellites (notamment en environnement urbain) et des sources d'interférences diverses peuvent limiter les performances du service de navigation, en termes de disponibilité et de continuité (le service necessitant au minimum 4 satellites en visibilité) mais aussi en termes de précision. Le but de la présente invention est par conséquent de proposer une méthode de positionnement satellitaire qui permette d'augmenter globalement la résilience du service de navigation et notamment de pallier les limitations d'un système GNSS lorsque le nombre de satellites en visibilité est faible et/ou les signaux satellitaires sont intérférés.
A cet effet, l'invention a pour objet une méthode de positionnement satellitaire mettant en œuvre une pluralité (*M*) de satellites et une pluralité (*N*) de plateformes mobiles, chaque plateforme embarquant un récepteur GNSS ainsi qu'un émetteur/récepteur radio, ladite méthode étant originale ce qu'elle comprend :

- une étape d'initialisation dans laquelle chaque plateforme estime de manière indépendante sa position initiale et les positions des satellites qu'elle a en visibilité, à partir de messages d'éphémérides reçus de ces derniers par le récepteur GNSS de ladite plateforme;
- une étape d'obtention d'une valeur initiale ($\hat{X}(0)$) d'un vecteur d'état global (*X*), représentatif des positions estimées des différentes plateformes et des décalages de leurs horloges internes respectives ;

et, jusqu'à ce qu'un critère d'arrêt soit satisfait, une séquence d'itérations successives, chaque itération comprenant:

- une étape de mesure par chaque plateforme *(PT_i)*, des pseudodistances, dites pseudodistances satellitaires ( $\rho_{i,j}^{sat}$ ), relatives à chaque satellite que son récepteur GNSS a en visibilité, ainsi que des pseudodistances, dites pseudodistances radio ( $\rho_{i,n}^{rad}$ ), qui la sépare des autres plateformes, lesdites pseudodistances satellitaires étant mesurées par le récepteur GNSS de ladite plateforme, lesdites pseudodistances radio étant mesurées au moyen de signaux de synchronisation radio émis par les émetteurs/récepteurs radio des autres plateformes et reçus par l'émetteur/récepteur radio de ladite plateforme;
- une étape de construction d'un vecteur d'observation hybride (*Y*) par concaténation d'un premier vecteur (*Y^sat*) et d'un second vecteur (*Y^rad*) donnant respectivement les pseudodistances satellitaires et les pseudodistances radio mesurées par la pluralité des plateformes mobiles;
- une étape de mise à jour d'une estimation du vecteur d'état global à partir de l'estimation de ce vecteur obtenue à l'itération précédente, du vecteur d'observation hybride (*Y(t)*) obtenu à l'étape courante et d'une matrice géométrique globale (*H_G*) dépendant des vecteurs directeurs (*u_{i,j}*) des droites joignant chaque plateforme aux satellites que son récepteur GNSS a en visibilité ainsi que des vecteurs directeurs (*v_{i,n}*) des droites joignant chaque plateforme aux autres plateformes de ladite pluralité de plateformes ;

les positions des plateformes et/ou les décalages de leurs horloges internes respectives étant donné(e)s par l'estimation du vecteur d'état global obtenue à la dernière itération.

Avantageusement, la matrice géométrique globale $H_G = \begin{bmatrix} H^{sat} \\ H^{rad} \end{bmatrix}$ est une matrice de taille $(K^{sat} + K^{rad}) \times 4N$, $K^{sat}$ et $K^{rad}$ étant respectivement le nombre total de pseudodistances satellitaires et de pseudodistances radio mesurées par ladite pluralité de plateformes, $N$ étant le nombre total de plateformes mobiles, avec :

$$H^{sat} = \begin{bmatrix} H_1^{sat} \\ \vdots \\ H_N^{sat} \end{bmatrix} \text{ de taille } K^{sat} \times 4 \text{ et } H_i^{sat} = \begin{bmatrix} -u_{i,j(1)}^T & 1 \\ \vdots & \vdots \\ -u_{i,j(K_i^{sat})}^T & 1 \end{bmatrix} \text{ et } H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix} \text{ de taille } K^{rad} \times 4, \text{ les}$$

vecteurs $u_{i,j(1)}, \cdots, u_{i,j(K_i^{sat})}$ étant les vecteurs directeurs des droites joignant la plateforme mobile $PT_i$ et les satelittes

$SAT_{j(1)}, \ldots, SAT_{j(K_i^{sat})}$ en visibilité du récepteur GNSS de cette plateforme et $v_{i,n}$ étant le vecteur directeur de la droite joignant la plateforme mobile $PT_i$ et la plateforme mobile $PT_n$.

L'étape de mise à jour du vecteur d'état global est effectuée de préférence par $\hat{X}(t) = \hat{X}(t-1) + \widehat{\delta X(t)}$

avec $\widehat{\delta X(t)} = \left(H_G(t)^T W H_G(t)\right)^{-1} H_G(t)^T W \delta Y(t)$ où $W$ est une matrice de pondération de taille $(K^{sat} + K^{rad}) \times (K^{sat} + K^{rad})$, $\delta Y(t)$ est la différence entre le vecteur d'observation hybride construit à l'itération courante et un vecteur d'observation hybride théorique $h(\hat{X}(t-1))$, t est l'indice temporel de l'itération courante, et $t - 1$ celui de l'itération précédente et $h$ étant une fonction d'obervation donnant les pseudodistances satellitaires et les pseudodistances radio en fonction du vecteur d'état global.

La matrice de pondération peut notamment être l'inverse de la matrice de covariance de $\delta Y(t)$.

Selon une variante de réalisation le vecteur d'état global est filtré par un filtrage de Kalman.

Selon un mode de réalisation centralisée de l'invention, lors de l'étape d'initialisation, chaque plateforme mobile transmet son estimation de position initiale et les positions des satellites que son récepteur GNSS a en visibilité à l'unité de gestion centralisée, ladite unité de gestion centralisée en déduisant la valeur initiale du vecteur d'état global.

Chaque plateforme mobile transmet alors à ladite unité de gestion centralisée les pseudodistances satellitaires et les pseudodistances radio qu'elle a mesurées, ladite unité de gestion centralisée en déduisant le vecteur d'observation hybride.

Au terme de la dernière itération, l'unité de gestion centralisée diffuse enfin à la pluralité de plateformes mobiles l'estimation courante du vecteur d'état global et chaque plateforme en déduit une estimation de sa position et/ou du décalage de son horloge interne par rapport à l'horloge de référence satellitaire.

Selon un mode de réalisation distribuée de l'invention, lors de l'étape d'initialisation, chaque plateforme mobile diffuse son estimation de position initiale et les positions des satellites que son récepteur GNSS a en visibilité aux autres plateformes mobiles de ladite pluralité, chaque plateforme mobile en déduisant la valeur initiale du vecteur d'état global.

Chaque plateforme mobile diffuse alors les pseudodistances satellitaires et les pseudodistances radio qu'elle a mesurées aux autres plateformes mobiles de ladite pluralité, chaque plateforme mobile en déduisant le vecteur d'observation hybride.

Les itérations de mise à jour du vecteur d'état global sont ensuite effectuées en parallèle par les plateformes mobiles et ,au terme de la dernière itération, chaque plateforme déduit de l'estimation courante du vecteur d'état global, une estimation de sa position et/ou du décalage de son horloge interne par rapport à l'horloge de référence satellitaire.

## BRÈVE DESCRIPTION DES DESSINS

L'invention apparaîtra plus clairement à la lecture de la description qui va suivre, donnée uniquement à titre d'exemple non limitatif, et faite en référence aux dessins dans lesquels :

[Fig. 1] La figure 1 illustre de manière schématique une méthode de positionnement GNSS selon un mode général de réalisation de l'invention ;
[Fig. 2] La figure 2 illustre de manière schématique une méthode de positionnement GNSS selon un premier mode particulier de réalisation de l'invention ;
[Fig. 3] La figure 3 illustre de manière schématique une méthode de positionnement GNSS selon un second mode particulier de réalisation de l'invention.

## EXPOSÉ DÉTAILLÉ DES MODES DE RÉALISATION

On considérera dans la suite un système de positionnement satellitaire GNSS composé d'une constellation de satellites notés $SAT_1$, $SAT_2$, ..., $SAT_M$, ainsi qu'une pluralité de plateformes mobiles connectées $PT_1$, $PT_2$,..., $PT_N$ équipées de récepteurs GNSS, notés $RX_1$, $RX_1$,..., $RX_N$ susceptibles de recevoir des signaux GNSS émis par ces satellites. Le système de positionnement GNSS pourra être notamment un système GPS, GALILEO, GLONASS ou BEIDOU. On suppose également que les plateformes mobiles sont équipées d'émetteurs/récepteurs radio pouvant émettre et recevoir des signaux de synchronisation radio. Par signal de synchronisation radio on entend un signal comportant des caractéristiques permettant à un récepteur d'identifier son émetteur et de discriminer un instant de synchronisation dans une trame temporelle, par exemple un début d'intervalle d'accès dans un système de communication TDMA, un palier dans un système de communication à sauts de fréquence, le début d'une séquence d'apprentissage (pour estimer la réponse impulsionnelle d'un canal de transmission), un entête de synchronisation, etc. La plupart des réseaux mobiles *ad hoc* utilisent des protocoles de communication ayant recours à de telles séquences de synchronisation.

Les plateformes mobiles $PT_1$, $PT_2$,..., $PT_N$ ainsi équipées sont capables de mesurer, d'une part, les temps d'arrivée des séquences satellitaires et d'en déduire les pseudodistances correspondantes et, d'autre part, les temps d'arrivée des séquences de synchronisation radio émises par les nœuds voisins du réseau. Par souci de simplicité, la position d'une platerforme mobile est supposée confondue avec celle du récepteur GNSS et de l'émetteur/récepteur des signaux de synchronisation radio.

Pour une plateforme mobile $PT_i$ donnée, on note dans la suite $\rho_{i,j}$ la pseudodistance vis-à-vis du satellite $SAT_j$, mesurée à partir de la séquence PRN émise par celui-ci et $D_{in}$ la pseudodistance mesurée par rapport à la plateforme mobile $PT_n$, à partir du signal de synchronisation radio émis par cette dernière. Ces pseudodistances peuvent s'exprimer de la manière suivante :

$$\rho_{i,j}^{sat} = c\left(ToA_{i,j}^{sat} + \delta t_i^{sat} - Te_j^{sat} + \varepsilon_{i,j}\right) = d_{i,j}^{sat} + c.\delta t_i^{sat} + c.\varepsilon_{i,j} \qquad (1\text{-}1)$$

$$\rho_{i,n}^{rad} = c\left(ToA_{i,n}^{rad} + \delta t_i^{rad} - Te_n^{rad} - \delta t_n^{rad} + \eta_{i,n}\right) = d_{i,n}^{rad} + c.\left(\delta t_i^{rad} - \delta t_n^{rad}\right) + c.\eta_{i,n}$$

$$(1\text{-}2)$$

où $\rho_{i,j}^{sat}$ et $\rho_{i,n}^{rad}$ sont respectivement les pseudodistances mesurées par la plateforme $PT_i$, relatives au satellite $SAT_j$ et

à la plateforme mobile $PT_n$, c est la vitesse de la lumière dans le vide, $ToA_{i,j}^{sat}$ est le temps d'arrivée de la séquence satellitaire émise par le satellite $SAT_j$, $\delta t_i^{sat}$ est la dérive de l'horloge interne de la plateforme $PT_i$ (plus précisément celle

du récepteur GNSS $RX_i$) par rapport à l'horloge de référence de la constellation satellitaire, $Te_j^{sat}$ est le temps d'émission de la séquence satellitaire, $ToA_{i,n}^{rad}$ est le temps d'arrivée de la séquence de synchronisation radio émise par

la plateforme $PT_n$ (mesuré au moyen de l'horloge interne de l'émetteur/récepteur radio de la plateforme $PT_i$),

$\delta t_i^{rad}$ - $\delta t_n^{rad}$ est la dérive relative de l'horloge de l'émetteur/récepteur radio de la plateforme $PT_i$ par rapport à celle

de la plateforme $PT_n$, $Te_n^{rad}$ est le temps d'émission du signal de synchronisation radio (mesuré au moyen de l'horloge interne de l'émetteur/récepteur radio de la plateforme $PT_n$, et enfin $\varepsilon_{i,j}$, $\eta_{i,n}$ sont des écarts temporels résiduels dûs aux erreurs non prises en compte dans le modèle et au bruit. La distance géométrique entre le satellite $SAT_j$ et la plateforme est notée $d_{i,j}^{sat}$ et la celle séparant les plateformes $PT_i$ et $PT_n$ est notée $d_{i,n}^{rad}$.

Les plateformes mobiles sont situées dans une zone géographique Z de faible étendue spatiale. Par faible étendue spatiale, on entend que les distances entre ces plateformes sont sensiblement inférieures aux distances séparant ces plateformes et les satellites du système de positionnement GNSS. En d'autres termes, pour deux plateformes mobiles quelconques situées dans la zone Z, on pourra considérer que les vecteurs directeurs des droites joignant ces plateformes à un satellite quelconque de la configuration (ou vecteurs de visée de ce satellite) sont sensiblement identiques, c'est-à-dire que le produit scalaire de ces deux vecteurs est sensiblement égal à 1. En outre, les signaux de synchronisation radio étant généralement récurrents, on supposera que $c.\ T_i \gg D$ où $T_i$ est la période de récurrence du signal et $D$ est l'étendue spatiale de la zone zone géographique $Z$, cette condition permettant de lever l'ambiguité sur le temps d'émission de la séquence de synchronisation. La valeur typique de $D$ peut aller jusqu'à quelques centaines de mètres voire quelques kilomètres.

On notera par la suite $\boldsymbol{X_{RXn}}$ le vecteur constitué par les coordonnées cartésiennes $x_n, y_n, z_n$ du récepteur $RX_n$ dans un référentiel géocentrique ainsi que par le décalage de son horloge interne (*receiver clock bias*), $\delta t_n$, par rapport à l'horloge de référence du système satellitaire GNSS, soit $X_{RXn}^T = [x_n, y_n, z_n, \delta t_n]$ et $\boldsymbol{X_{RX}}$ le vecteur de taille $4N$ obtenu par concaténation des vecteurs, $\boldsymbol{X_{RXn}}$, $n = 1, \dots, N$, c'est-à-dire : $X_{RX}^T = \begin{bmatrix} X_{RX1}^T, X_{RX2}^T, \dots, X_{RXN}^T \end{bmatrix}$. Les vecteurs $\boldsymbol{X_{RXn}}$, $n = 1, \dots, N$ sont encore dénommés vecteurs d'état des différents récepteurs.

L'idée à la base de l'invention est d'estimer un vecteur d'état global représentatif des positions et des décalages d'horloge interne des différentes plateformes mobiles au moyen d'une hybridation serrée utilisant à la fois les pseudo-distances satellitaires $\rho_{i,j}^{sat}$ et les pseudodistances radio $\rho_{i,n}^{rad}$. Une telle hybridation permet de réduire significativement les erreurs de positions et de décalages d'horloge interne des différentes plateformes et de pallier, le cas échéant, un nombre insuffisant de satellites GNSS en visibilité.

Pour ce faire, on construit un vecteur d'obervation hybride $\boldsymbol{Y}$ agrégeant les pseudodistances satellitaires $\rho_{i,j}^{sat}$ mesurées par chacune des plateformes mobiles $PT_i$, $i = 1, \dots, N$ et les pseudodistances radio $\rho_{i,n}^{rad}$ mesurées pour chaque couple de plateformes ($PT_i, PT_n$), $i, n = 1, \dots, N$. Plus précisément, à chaque instant $\tau$, on obtient un vecteur hybride $\boldsymbol{Y(t)}$, ou plus simplement $\boldsymbol{Y}$, de taille $K = K^{sat} + K^{rad}$, par concaténation d'un premier vecteur représentatif des pseudodistances satellitaires $\boldsymbol{Y^{sat}}$ et d'un second vecteur représentatif des pseudodistances radio, $\boldsymbol{Y^{rad}}$, soit :

$$Y^T = \begin{bmatrix} Y^{sat^T} & Y^{rad^T} \end{bmatrix} \tag{2-1}$$

avec

$$Y^{sat^T} = \begin{bmatrix} \rho_{i,j}^{sat}, i = 1, \dots, N, j \in V(RX_i) \end{bmatrix} \tag{2-2}$$

où $V(RX_i)$ est la liste des indices des satellites en visibilité du récepteur $RX_i$, et

$$Y^{rad^T} = \begin{bmatrix} \rho_{i,n}^{rad}, i, n = 1, \dots, N, i \neq n \end{bmatrix} \tag{2-3}$$

étant entendu dans (2-3) qu'une plateforme mobile peut recevoir un signal de synchronisation radio de toutes les autres.

On a noté $K^{sat} = \sum_{i=1}^{N} K_i^{sat}$, avec $K_i^{sat} = Card\left( V(RX_i) \right)$, le nombre de pseudodistances satellitaires mesurées par les différents récepteurs, et $K^{rad} = N(N - 1)$.

A partir de ce vecteur d'observation hybride, on cherche à estimer le vecteur d'état global $\boldsymbol{X}$ agrégeant les positions et les décalages d'horloge interne respectifs des différents récepteurs GNSS $RX_i$, $i = 1, \dots, N$. Plus précisément, le vecteur d'état global $\boldsymbol{X}$ est construit par concaténation des vecteurs d'état individuels des différents récepteurs :

$$X^T = \begin{bmatrix} X_1^T, X_2^T, \dots, X_N^T \end{bmatrix} \tag{3-1}$$

où $X_i^T = \begin{bmatrix} x_i, y_i, z_i, \delta t_i^{sat} \end{bmatrix}$ est le vecteur d'état du récepteur GNSS $RX_i$, embarqué sur la plateforme mobile $PT_i$, où $x_i$, $y_i$, $z_i$ sont les coordonnées cartésiennes de la position de la plateforme dans un référentiel géocentrique et $\delta t_i^{sat}$ est le décalage de l'horloge interne de la plateforme $PT_i$ par rapport à l'horloge de référence de la constellation satellitaire.

Ce vecteur d'état global peut être estimé (au sens d'une estimation LSE) par approximations sucessives à partir d'une valeur initiale, $\hat{\boldsymbol{X}}(0)$. Cette valeur initiale est obtenue à partir d'estimations des vecteurs d'état individuels $\hat{\boldsymbol{X}}_i(0)$, $i = 1, \dots, N$, fournies, de manière autonome et indépendante, par les récepteurs GNSS ou encore par des systèmes inertiels hébergés sur les différentes plateformes.

Plus précisément, à chaque itération *t*, il est procédé à la mise à jour de l'estimation du vecteur d'état global au moyen de l'algorithme de Gauss-Newton :

$$\delta Y(t) = Y(t) - h\big(\widehat{X}(t-1)\big) \qquad (4\text{-}1)$$

$$\widehat{\delta X(t)} = \big(H_G(t)^T W H_G(t)\big)^{-1} H_G(t)^T W \delta Y(t) \qquad (4\text{-}2)$$

$$\widehat{X}(t) = \widehat{X}(t-1) + \widehat{\delta X(t)} \qquad (4\text{-}3)$$

les itérations se poursuivant jusqu'à ce qu'un critère d'arrêt soit satisfait, par exemple jusqu'à ce que la norme du vecteur de mise à jour, $\|\delta \widehat{X}\|$, soit inférieure à un seuil prédéterminé ou qu'un nombre maximal d'itérations soit atteint.

La matrice $H_G$ est une matrice jacobienne (dite aussi matrice géométrique, obtenue par linéarisation de la fonction d'observation $h(X)$ (donnant le vecteur d'observation hybride $Y$, c'est-à-dire les pseudodistances satellitaires et les pseudodistances radio, en fonction du vecteur d'état global $X$) au point de dernière estimation $\widehat{X}(t\text{-}1)$). La matrice $H_G$ est une matrice de taille $K \times 4N$ et $W$ est une matrice diagonale de pondération de taille $(K^{sat} + K^{rad}) \times (K^{sat} + K^{rad})$, par exemple égale à l'inverse de la matrice de covariance des erreurs de mesure sur les pseudodistances (supposées décorelées), autrement dit de la matrice de covariance du vecteur $\delta Y$.

La matrice $H_G$ peut être qualifiée de globale dans la mesure où, d'une part, elle porte sur l'ensemble des (récepteurs GNSS hébergés sur les) plateformes mobiles et que, d'autre part, elle prend en compte l'ensemble des pseudodistances, qu'elles soient satellitaires ou radio. Plus précisément, la matrice géométrique globale $H_G$ peut s'exprimer sous la forme :

$$H_G = \begin{bmatrix} H^{sat} \\ H^{rad} \end{bmatrix} \qquad (5\text{-}1)$$

avec :

$$H^{sat} = \begin{bmatrix} H_1^{sat} \\ \vdots \\ H_N^{sat} \end{bmatrix} \text{ de taille } K^{sat} \times 4 \quad \text{et} \quad H_i^{sat} = \begin{bmatrix} -u_{i,j(1)}^T & 1 \\ \vdots & \vdots \\ -u_{i,j(K_i^{sat})}^T & 1 \end{bmatrix} \text{ de taille } K_i^{sat} \times 4 \qquad (5\text{-}2)$$

$$\text{et } H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix} \text{ de taille } K^{rad} \times 4 \qquad (5\text{-}3)$$

les vecteurs $u_{i,j(1)}, \ldots, u_{i,j(K_i^{sat})}$ étant les vecteurs directeurs des droites joignant la plateforme mobile $PT_i$ et les satellites $SAT_{j(1)}, \ldots, SAT_{j(K_i^{sat})}$ en visibilité de $RX_i$ et $v_{i,n}$ étant le vecteur directeur de la droite joignant la plateforme mobile $PT_i$ et la plateforme mobile $PT_n$, c'est à dire : $u_{i,j}^T = \left( \frac{x_j^{SAT} - x_i^{PT}}{d_{i,j}^{sat}}, \frac{y_j^{SAT} - y_i^{PT}}{d_{i,j}^{sat}}, \frac{z_j^{SAT} - z_i^{PT}}{d_{i,j}^{sat}} \right)$ et $v_{i,n}^T = \left( \frac{x_n^{PT} - x_i^{PT}}{d_{i,n}^{rad}}, \frac{y_n^{PT} - y_i^{PT}}{d_{i,n}^{rad}}, \frac{z_n^{PT} - z_i^{PT}}{d_{i,n}^{rad}} \right)$ où ($x_i^{PT}, y_i^{PT}, z_i^{PT}$) et ($x_j^{SAT}, y_j^{SAT}, z_j^{SAT}$) sont les coordonnées cartésiennes respectives de la plateforme $PT_i$ et satellite $SAT_j$ dans le référentiel géocentrique. Par souci de clarté, seuls ont été indiqués dans la matrice $H^{rad}$ ci-dessus les éléments relatifs au couple de plateformes $PT_i, PT_n$

Selon une variante, le vecteur d'état $\widehat{X}$ peut être obtenu de manière connue en soi, par filtrage de Kalman, au moyen d'un modèle récursif de transition d'état et un modèle d'observation fournissant une prédiction de $Y$ à partir de l'état $X$. Le filtrage du vecteur d'état permet d'améliorer le rapport signal sur bruit des positions des récepteurs GNSS.

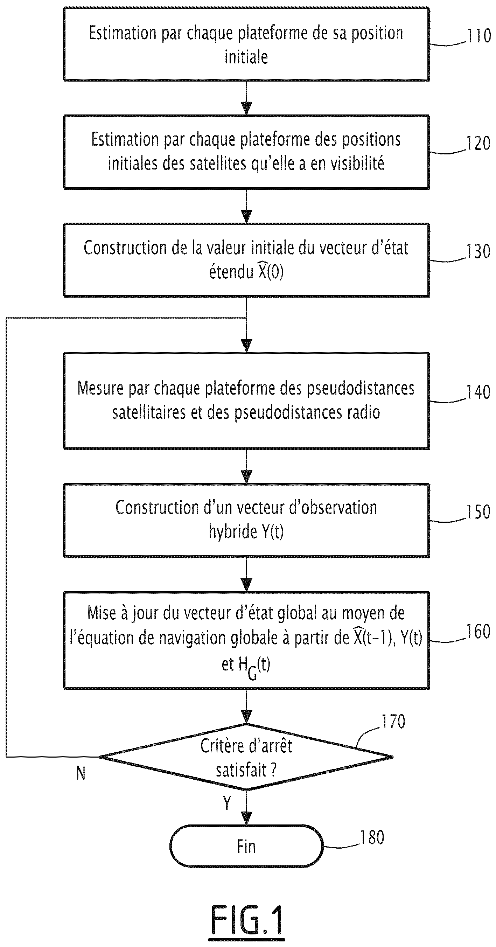

La figure 1 représente de manière schématique une méthode de positionnement GNSS selon un mode général de réalisation de l'invention.

On considère à nouveau le scenario d'un système de positionnement GNSS à $M$ satellites et $N$ plateformes mobiles connectées, équipées à la fois de récepteurs GNSS et d'émetteurs/récepteurs radio. Par souci de simplification, on suppose que chaque plateforme mobile peut recevoir des signaux de synchronisation radio des $N - 1$ autres plateformes.

Dans une première étape 110, chacune des plateformes effectue une première estimation de sa position de manière indépendante. Cette estimation peut être réalisée par le récepteur GNSS de la plateforme en mode autonome, ou bien celle fournie par un système inertiel de la plateforme voire par un système de communication radio. Chacune des plateformes initialise également la valeur de décalage de son horloge interne par rapport à l'horloge de référence de la constellation satellitaire.

Dans une seconde étape, 120, chacun des récepteurs GNSS effectue une estimation des positions des différents satellites qu'il a en visibilité à partir des messages d'éphémérides reçus de ces derniers.

A l'étape 130, on construit (de manière centralisée ou distribuée) la valeur initiale d'un vecteur d'état global, $\hat{X}(0)$, de taille $4N$, représentatif des positions estimées des différentes plateformes et des décalages de leurs horloges internes respectives. Cette valeur initiale $\hat{X}(0)$ est typiquement obtenue par concaténation des vecteurs d'état des récepteurs GNSS hébergés sur les différentes plateformes.

La méthode de positionnement se poursuit ensuite en itérant les étapes 140-160 jusqu'à ce qu'un critère d'arrêt 170 soit satisfait.

A l'étape 140, chacun des récepteurs GNSS effectue à l'instant $t$ correspondant à cette étape, une mesure des pseudodistances qui le séparent des différents satellites en visibilité et estime les positions de ces satellites à partir des messages d'éphémérides reçus de ces derniers. Chacun des émetteurs/récepteurs radio effectue en outre à cet instant une mesure des pseudodistances qui le séparent des émetteurs/récepteurs radio embarqués sur les autres plateformes mobiles.

A l'étape 150, on construit (de manière centralisée ou distribuée) un vecteur d'observation hybride, $Y(t)$, de taille $K^{sat} + K^{rad}$, représentatif des pseudodistances satellitaires et des pseudodistances radio mesurées à l'instant $t$. On en déduit, le résidu d'observation hybride, $\delta Y(t)$, par différence avec une observation théorique obtenue à partir du vecteur d'état estimé à l'itération précédente, soit $h(\hat{X}(t - 1))$.

A l'étape 160, on estime une nouvelle valeur du vecteur d'état global, $\hat{X}(t)$, à partir de sa valeur à l'instant $t - 1$, $\hat{X}(t - 1)$, du vecteur d'observation global obtenu à l'étape courante et de la matrice géométrique globale, $H_G(t)$, dépendant des vecteurs directeurs $(u_{i,j(1)}, ..., u_{i,j(Ki)})$, $i = 1, ..., N$) des droites joignant chacune des $N$ plateformes aux satellites que le récepteur GNSS embarqué a en visibilité, selon les expressions (4-1), (4-2) et (4-3).

A l'étape 170, on teste si le critère d'arrêt est satisfait. Dans l'affirmative le processus itératif s'arrête en 180, et dans le cas contraire, on retourne à l'étape 140.

A l'étape 180, la dernière estimation du vecteur d'état global donne les positions des différentes plateformes mobiles ainsi que les décalages respectifs de leurs horloges internes par rapport à l'horloge de référence de la constellation satellitaire.

Il est important de noter que, contrairement à un système de positionnement GNSS classique, les récepteurs GNSS embarqués sur les différentes plateformes mobiles n'ont pas nécessairement besoin d'avoir au moins 4 satellites en visibilité pour obtenir leurs positions. En effet, la coopération entre plateformes mobiles au moyen des liaisons radio permet d'obtenir un système d'équations de navigation déterminé alors même que celui du récepteur GNSS seul, en situation de visibilité réduite, ne le serait pas.

La méthode de positionnement GNSS collaboratif présentée ci-dessus peut se décliner selon un mode de réalisation centralisé et un mode de réalisation distribué.

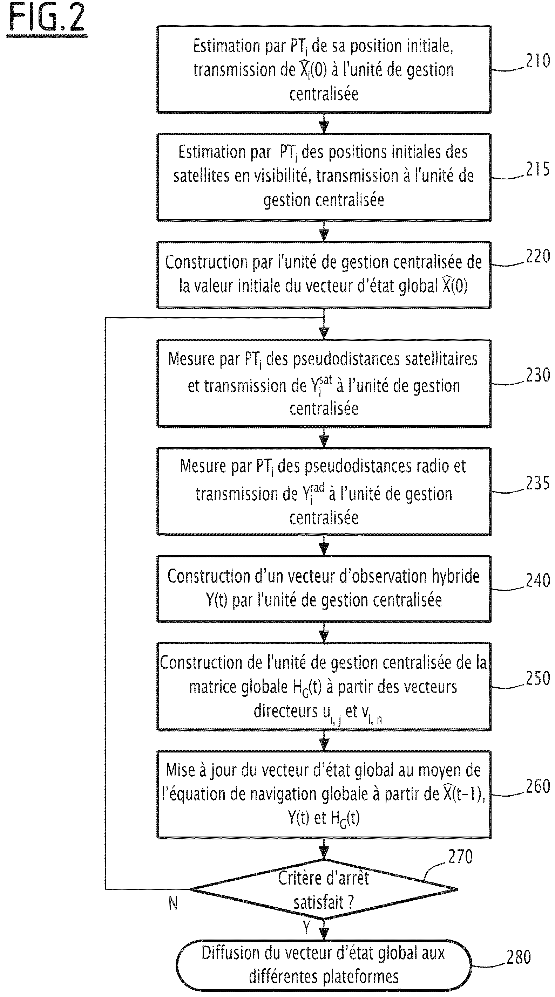

La figure 2 illustre de manière schématique une méthode de positionnement GNSS selon un mode centralisé de réalisation de l'invention.

Dans une étape d'initialisation, 210, chacune des plateformes mobiles effectue individuellement une première estimation de sa position comme indiqué précédemment à l'étape 110. Les valeurs initiales $\hat{X}_i(0)$ des vecteurs d'état individuels ainsi estimés sont transmises par voie radio à une unité de gestion centralisée.

Cette unité de gestion centralisée pourra être un serveur de calcul en périphérie de réseau (*edge server*), un serveur distant ou encore un serveur embarqué à bord d'une plateforme spécifique.

Optionnellement, dans une seconde étape, 215, chaque récepteur GNSS embarqué estime les positions des satellites qu'il a en visibilité, à partir des messages d'éphémérides qu'il reçoit de ces derniers. Les positions des satellites ainsi estimées sont alors transmises à l'unité de gestion centralisée. Alternativement, l'unité de gestion centralisée pourra elle-même estimer en 215 les positions de ces satellites. Ce sera notamment le cas si l'unité de gestion centralisée reçoit elle-même les messages d'éphémérides de l'ensemble des satellites en visibilité.

A l'étape 220, l'unité de gestion centralisée construit la valeur initiale d'un vecteur d'état global, $\hat{X}(0)$, de taille $4N$, représentatif des premières positions estimées des différentes plateformes mobiles et des décalages de leurs horloges internes.

La méthode de positionnement se poursuit ensuite en itérant les étapes 230-260 jusqu'à ce qu'un critère d'arrêt 270 soit satisfait.

En 230, les récepteurs GNSS équipant les différentes plateformes mobiles mesurent les pseudodistances respectives qui les séparent des différents satellites qu'ils ont en visibilité. Ces mesures de pseudodistances peuvent être fournies comme données brutes par un récepteur GNSS conventionnel. Chaque plateforme mobile $PT_i$ transmet alors le vecteur de ces pseudodistances satellitaires, soit $Y_i^{sat} = \left[ \rho_{i,j}^{sat}, j \in V(RX_i) \right]^T$ à une unité de gestion centralisée.

L'unité de gestion centralisée agrège ces mesures par exemple en concaténant les vecteurs $Y_i^{sat}$, $i = 1, .., N$ pour former le vecteur $\boldsymbol{Y}^{sat}$ donnant l'ensemble des pseudodistances satellitaires mesurées par les plateformes mobiles.

En 235, chacun des émetteurs/récepteurs radio équipant les différentes plateformes mobiles mesure à partir des signaux de synchronisation qu'il reçoit les pseudodistances qui le séparent des autres plateformes mobiles. Chaque plateforme mobile $PT_i$ transmet alors le vecteur de ces pseudodistances radio, $Y_i^{rad} = \left[ \rho_{i,n}^{rad}, n = 1, .., N, n \neq i \right]^T$, à l'unité de gestion centralisée. L'unité de gestion centralisée agrège ces mesures par exemple en concaténant les vecteurs $Y_i^{rad}$, $i = 1, .., N$ pour former le vecteur $\boldsymbol{Y}^{rad}$ donnant l'ensemble des pseudodistances radio mesurées par les plateformes mobiles.

En 240, l'unité de gestion centralisée agrège les pseudodistances satellitaires et les pseudodistances radio, par exemple en concaténant les vecteurs $\boldsymbol{Y}^{sat}$ et $\boldsymbol{Y}^{rad}$ pour former un vecteur d'observation hybride, $Y(t)$, à l'instant $t$.

En 250, l'unité de gestion centralisée détermine les vecteurs directeurs $u_{i,j}$ et $v_{i,n}$ à partir des coordonnées des positions estimées des satellites et des plateformes mobiles. Les positions des satellites pourront avoir été transmises par les différentes plateformes mobiles à partir des messages d'éphémérides des satellites qu'elles ont en visibilité ou bien estimées directement par l'unité de gestion centralisée si celle-ci reçoit les messages en question. Les positions des différentes plateformes pourront être celles estimées à l'étape précédente. Pour simplifier le calcul, on pourra considérer qu'en raison de la faible étendue de la zone géographique dans laquelle les plateformes sont déployées, les vecteurs $u_{i,j}$ ne dépendent que de l'indice $j$ du satellite. Ainsi, dans le cas où l'unité de gestion centralisée est hébergée par une plateforme spécifique $i_0$, on pourra supposer que $u_{i,j} \approx u_{i_0,j}$. L'unité de gestion centralisée construit alors la matrice $\boldsymbol{H_G}(t)$ à partir des vecteurs directeurs $u_{i,j}$ et $v_{i,n}$.

En 260, l'unité de gestion centralisée met à jour le vecteur d'état global au moyen des expressions (4-1) à (4-3).

Elle teste ensuite en 270 si le critère d'arrêt est satisfait. Dans l'affirmative le processus itératif s'arrête en 280, et dans le cas contraire, on retourne à l'étape 230.

A l'étape 280, l'unité de gestion centralisée diffuse aux différentes plateformes mobiles la dernière valeur du vecteur d'état global, chaque plateforme en extrayant une estimation de sa position ainsi que de son décalage d'horloge interne par rapport à l'horloge de référence de la constellation satellitaire. Alternativement, l'unité de gestion centralisée peut transmettre cette information de manière individuelle à chacune des plateformes mobiles

En tout état de cause, ces estimations sont sensiblement plus robustes que celles qui auraient été obtenues individuellement par chacune des plateformes.

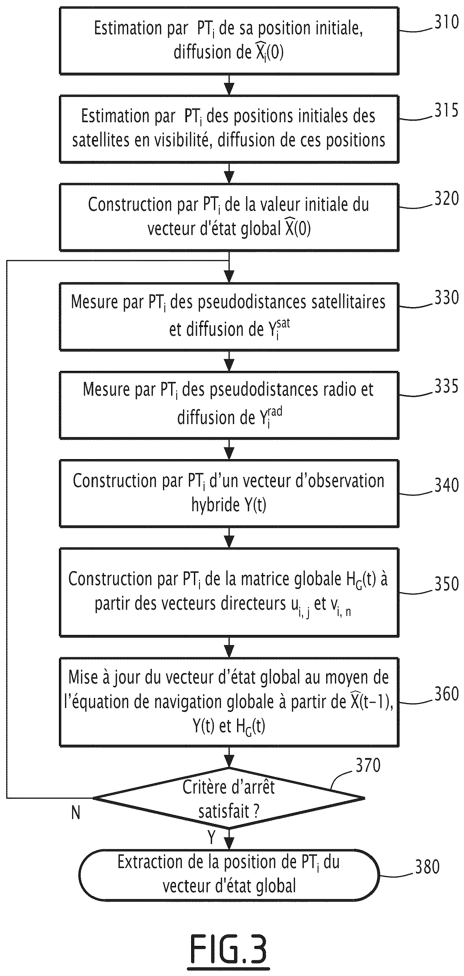

La figure 3 illustre de manière schématique une méthode de positionnement GNSS selon un mode distribué de réalisation de l'invention.

Dans une étape d'initialisation, 310, chacune des plateformes mobiles effectue individuellement une première estimation de sa position comme précédemment indiqué à l'étape 110 ou 210. Chaque plateforme mobile $PT_i$ diffuse la valeur initiale $\hat{X}_i(0)$ de son vecteur d'état individuel aux autres plateformes.

Dans une seconde étape d'initialisation 315, chaque récepteur GNSS embarqué sur une plateforme estime les positions des satellites qu'il a en visibilité, à partir des messages d'éphémérides qu'il reçoit de ces derniers. La plateforme en question diffuse ces positions aux autres plateformes mobiles.

A l'étape 320, chaque plateforme construit la valeur initiale d'un vecteur d'état global, $\hat{X}(0)$, de taille $4N$, représentatif des premières positions estimées des différentes plateformes mobiles et des décalages de leurs horloges internes.

Chaque plateforme itère ensuite les étapes 330-360 jusqu'à ce qu'un critère d'arrêt 370 soit satisfait.

En 330 chaque plateforme mobile $PT_i$ mesure, au moyen de son récepteur GNSS embarqué, $RX_i$, les pseudodistances qui la séparent des différents satellites en visibilité, chaque plateforme mobile $PT_i$ diffusant alors un vecteur de pseudodistances satellitaires, $Y_i^{sat}$, aux autres plateformes mobiles. Chaque plateforme agrège les pseudodistances satellitaires reçues à celles qu'elle a mesurées pour former un vecteur $\boldsymbol{Y}^{sat}$.

En 335, chaque plateforme mobile $PT_i$ mesure, au moyen de son émetteur/récepteur radio, les pseudodistances qui la séparent des autres plateformes mobiles, chaque plateforme mobile $PT_i$ diffusant alors un vecteur de pseudodistances radio, $Y_i^{rad}$, aux autres plateformes mobiles. Chaque plateforme agrège les pseudodistances radio qu'elle a reçues à celles qu'elle a mesurées pour former un vecteur **Y** $^{rad}$.

En 340, chaque plateforme mobile agrège les pseudodistances satellitaires et les pseudodistances radio, par exemple en concaténant les vecteurs **Y** $^{sat}$ et **Y** $^{rad}$ pour former un vecteur d'observation hybride, $Y(t)$, à l'instant $t$ .

En 350, chaque plateforme mobile détermine les vecteurs directeurs $\boldsymbol{u}_{i,j}$ et $\boldsymbol{v}_{i,n}$ à partir des coordonnées des positions estimées des satellites et des plateformes mobiles. Les positions des différentes plateformes pourront être celles estimées à l'étape précédente et celles des satellites à partir des messages d'éphémérides. Chaque plateforme construit alors la matrice $\boldsymbol{H_G}(\boldsymbol{t})$ à partir des vecteurs directeurs $\boldsymbol{u}_{i,j}$ et $\boldsymbol{v}_{i,n}$.

En 360, chaque plateforme mobile met à jour le vecteur d'état global au moyen des expressions (4-1) à (4-3) et teste ensuite en 370 si le critère d'arrêt est satisfait. Dans l'affirmative le processus itératif s'arrête en 380, et, dans le cas contraire, on retourne à l'étape 330.

Chaque plateforme mobile extrait en 380 de la dernière valeur du vecteur d'état global une estimation de sa position ainsi que de son décalage d'horloge interne par rapport à l'horloge de référence de la constellation satellitaire.

## Revendications

1. Méthode de positionnement satellitaire mettant en œuvre une pluralité (*M*) de satellites et une pluralité (*N*) de plateformes mobiles, chaque plateforme embarquant un récepteur GNSS ainsi qu'un émetteur/récepteur radio, ladite méthode étant **caractérisée en ce qu'**elle comprend :

   - une étape d'initialisation (110, 120) dans laquelle chaque plateforme estime (110,120) de manière indépendante sa position initiale et les positions des satellites qu'elle a en visibilité, à partir de messages d'éphémérides reçus de ces derniers par le récepteur GNSS de ladite plateforme;
   - une étape d'obtention (130) d'une valeur initiale ($\hat{\boldsymbol{X}}(0)$) d'un vecteur d'état global (*X*), représentatif des positions estimées des différentes plateformes et des décalages de leurs horloges internes respectives ;

   et, jusqu'à ce qu'un critère d'arrêt (170) soit satisfait, une séquence d'itérations successives, chaque itération comprenant:

   - une étape de mesure (140), par chaque plateforme (*PT$_i$*), des pseudodistances, dites pseudodistances satellitaires ( $\rho_{i,j}^{sat}$ ), relatives à chaque satellite que son récepteur GNSS a en visibilité, ainsi que des pseudodistances, dites pseudodistances radio ( $\rho_{i,n}^{rad}$ ), qui la sépare des autres plateformes, lesdites pseudodistances satellitaires étant mesurées par le récepteur GNSS de ladite plateforme, lesdites pseudodistances radio étant mesurées au moyen de signaux de synchronisation radio émis par les émetteurs/récepteurs radio des autres plateformes et reçus par l'émetteur/récepteur radio de ladite plateforme;
   - une étape de construction (150) d'un vecteur d'observation hybride (**Y**) par concaténation d'un premier vecteur (**Y** $^{sat}$ ) et d'un second vecteur (**Y** $^{rad}$) donnant respectivement les pseudodistances satellitaires et les pseudodistances radio mesurées par la pluralité des plateformes mobiles;
   - une étape de mise à jour (160) d'une estimation du vecteur d'état global à partir de l'estimation de ce vecteur obtenue à l'itération précédente, du vecteur d'observation hybride (**Y**(**t**) obtenu à l'étape courante et d'une matrice géométrique globale (*H$_G$*) dépendant des vecteurs directeurs (*u$_{i,j}$*) des droites joignant chaque plateforme aux satellites que son récepteur GNSS a en visibilité ainsi que des vecteurs directeurs (*v$_{i,n}$*) des droites joignant chaque plateforme aux autres plateformes de ladite pluralité de plateformes ;

   les positions des plateformes et/ou les décalages de leurs horloges internes respectives étant donné(e)s par l'estimation du vecteur d'état global obtenue à la dernière itération.

2. Méthode de positionnement satellitaire selon la revendication 1, **caractérisée en ce que** la matrice géométrique globale $H_G = \begin{bmatrix} H^{sat} \\ H^{rad} \end{bmatrix}$ est une matrice de taille $(K^{sat} + K^{rad}) \times 4N$, $K^{sat}$ et $K^{rad}$ étant respectivement le nombre total de pseudodistances satellitaires et de pseudodistances radio mesurées par ladite pluralité de plateformes, *N* étant le nombre total de plateformes mobiles, avec : $H^{sat} = \begin{bmatrix} H_1^{sat} \\ \vdots \\ H_N^{sat} \end{bmatrix}$ de taille $K^{sat} \times 4$ et $H_i^{sat} = \begin{bmatrix} -u_{i,j(1)}^T & 1 \\ \vdots & \vdots \\ -u_{i,j(K_i^{sat})}^T & 1 \end{bmatrix}$ et

$H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix}$ de taille $K^{rad} \times 4$, les vecteurs $u_{i,j(1)}, \ldots, u_{i,j(K_i^{sat})}$ étant les vecteurs directeurs des droites joignant la plateforme mobile $PT_i$ et les satellites $SAT_{j(1)}, \ldots, SAT_{j(K_i^{sat})}$ en visibilité du récepteur GNSS de cette plateforme et $v_{i,n}$ étant le vecteur directeur de la droite joignant la plateforme mobile $PT_i$ et la plateforme mobile $PT_n$.

3. Méthode de positionnement satellitaire selon la revendication 2, **caractérisée en ce que** l'étape de mise à jour du vecteur d'état global est effectuée par $\hat{X}(t) = \hat{X}(t-1) + \widehat{\delta X(t)}$ avec

$\widehat{\delta X(t)} = \left( H_G(t)^T W H_G(t) \right)^{-1} H_G(t)^T W \delta Y(t)$ où $W$ est une matrice de pondération de taille $(K^{sat} + K^{rad})$ $\times (K^{sat} + K^{rad})$, $\delta Y(t)$ est la différence entre le vecteur d'observation hybride construit à l'itération courante et un vecteur d'observation hybride théorique $h(\hat{X}(t-1))$, $t$ est l'indice temporel de l'itération courante, et $t$ - $1$ celui de l'itération précédente et $h$ étant une fonction d'obervation donnant les pseudodistances satellitaires et les pseudodistances radio en fonction du vecteur d'état global.

4. Méthode de positionnement satellitaire selon la revendication 3, **caractérisée en ce que** la matrice de pondération est l'inverse de la matrice de covariance de $\delta Y(t)$.

5. Méthode de positionnement satellitaire selon la revendication 1, **caractérisée en ce que** le vecteur d'état global est filtré par un filtrage de Kalman.

6. Méthode de positionnement satellitaire selon la revendication 1, **caractérisée en ce qu'**à l'étape d'initialisation, chaque plateforme mobile transmet (210,215) son estimation de position initiale et les positions des satellites que son récepteur GNSS a en visibilité à l'unité de gestion centralisée, ladite unité de gestion centralisée en déduisant (220) la valeur initiale du vecteur d'état global.

7. Méthode de positionnement satellitaire selon la revendication 6, **caractérisée en ce que** chaque plateforme mobile transmet (230,235) à ladite unité de gestion centralisée les pseudodistances satellitaires et les pseudodistances radio qu'elle a mesurées, ladite unité de gestion centralisée en déduisant (240) le vecteur d'observation hybride.

8. Méthode de positionnement satellitaire selon la revendication 7, **caractérisée en ce qu'**au terme de la dernière itération, l'unité de gestion centralisée diffuse (280) à la pluralité de plateformes mobiles l'estimation courante du vecteur d'état global et que chaque plateforme en déduit une estimation de sa position et/ou du décalage de son horloge interne par rapport à l'horloge de référence satellitaire.

9. Méthode de positionnement satellitaire selon la revendication 1, **caractérisée en ce qu'**à l'étape d'initialisation, chaque plateforme mobile diffuse (310,315) chaque son estimation de position initiale et les positions des satellites que son récepteur GNSS a en visibilité aux autres plateformes mobiles de ladite pluralité, chaque plateforme mobile en déduisant (320) la valeur initiale du vecteur d'état global.

10. Méthode de positionnement satellitaire selon la revendication 9, **caractérisée en ce que** chaque plateforme mobile diffuse (330,235) les pseudodistances satellitaires et les pseudodistances radio qu'elle a mesurées aux autres plateformes mobiles de ladite pluralité, chaque plateforme mobile en déduisant (340) le vecteur d'observation hybride.

11. Méthode de positionnement satellitaire selon la revendication 10, **caractérisée en ce que** les itérations de mise à jour du vecteur d'état global sont effectuées en parallèle par les plateformes mobiles et qu'au terme de la dernière itération, chaque plateforme déduit (380) de l'estimation courante du vecteur d'état global, une estimation de sa position et/ou du décalage de son horloge interne par rapport à l'horloge de référence satellitaire.

Estimation par chaque plateforme de sa position initiale —110

Estimation par chaque plateforme des positions initiales des satellites qu'elle a en visibilité —120

Construction de la valeur initiale du vecteur d'état étendu $\widehat{X}(0)$ —130

Mesure par chaque plateforme des pseudodistances satellitaires et des pseudodistances radio —140

Construction d'un vecteur d'observation hybride Y(t) —150

Mise à jour du vecteur d'état global au moyen de l'équation de navigation globale à partir de $\widehat{X}(t-1)$, Y(t) et $H_G(t)$ —160

Critère d'arrêt satisfait ? —170

N

Y

Fin —180

FIG.1

## FIG.2

Estimation par PT$_i$ de sa position initiale, transmission de $\widehat{X}_i(0)$ à l'unité de gestion centralisée — 210

Estimation par PT$_i$ des positions initiales des satellites en visibilité, transmission à l'unité de gestion centralisée — 215

Construction par l'unité de gestion centralisée de la valeur initiale du vecteur d'état global $\widehat{X}(0)$ — 220

Mesure par PT$_i$ des pseudodistances satellitaires et transmission de $Y_i^{sat}$ à l'unité de gestion centralisée — 230

Mesure par PT$_i$ des pseudodistances radio et transmission de $Y_i^{rad}$ à l'unité de gestion centralisée — 235

Construction d'un vecteur d'observation hybride $Y(t)$ par l'unité de gestion centralisée — 240

Construction de l'unité de gestion centralisée de la matrice globale $H_G(t)$ à partir des vecteurs directeurs $u_{i,j}$ et $v_{i,n}$ — 250

Mise à jour du vecteur d'état global au moyen de l'équation de navigation globale à partir de $\widehat{X}(t-1)$, $Y(t)$ et $H_G(t)$ — 260

Critère d'arrêt satisfait ? — 270

N

Y

Diffusion du vecteur d'état global aux différentes plateformes — 280

Estimation par $PT_i$ de sa position initiale, diffusion de $\widehat{X_i}(0)$ —310

Estimation par $PT_i$ des positions initiales des satellites en visibilité, diffusion de ces positions —315

Construction par $PT_i$ de la valeur initiale du vecteur d'état global $\widehat{X}(0)$ —320

Mesure par $PT_i$ des pseudodistances satellitaires et diffusion de $Y_i^{sat}$ —330

Mesure par $PT_i$ des pseudodistances radio et diffusion de $Y_i^{rad}$ —335

Construction par $PT_i$ d'un vecteur d'observation hybride $Y(t)$ —340

Construction par $PT_i$ de la matrice globale $H_G(t)$ à partir des vecteurs directeurs $u_{i,j}$ et $v_{i,n}$ —350

Mise à jour du vecteur d'état global au moyen de l'équation de navigation globale à partir de $\widehat{X}(t-1)$, $Y(t)$ et $H_G(t)$ —360

Critère d'arrêt satisfait ? —370

N

Y

Extraction de la position de $PT_i$ du vecteur d'état global —380

## FIG.3

Europäisches
Patentamt

European
Patent Office

Office européen
des brevets

**RAPPORT DE RECHERCHE EUROPEENNE**

Numéro de la demande

EP 26 15 6046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHAO HONGBO ET AL: "On the Node Impact for Multi-Vehicle Cooperative Positioning Based on CRLB Analysis", 2024 IEEE 27TH INTERNATIONAL CONFERENCE ON INTELLIGENT TRANSPORTATION SYSTEMS (ITSC), IEEE, 24 septembre 2024 (2024-09-24), pages 1641-1647, XP034866295, DOI: 10.1109/ITSC58415.2024.10919906 * figure 1 * * Abstract * * Section I to II * * Équations 4-6 * ----- | 1-11 | INV. G01S5/02 G01S19/03 G01S19/46 |
| A | LASSOUED KHAOULA ET AL: "Cooperative localization of vehicles sharing GNSS pseudoranges corrections with no base station using set inversion", 2016 IEEE INTELLIGENT VEHICLES SYMPOSIUM (IV), IEEE, 19 juin 2016 (2016-06-19), pages 496-501, XP032939010, DOI: 10.1109/IVS.2016.7535432 * Équation 8 * ----- | 1,2 | DOMAINES TECHNIQUES RECHERCHES (IPC) G01S |
| A | VLADIMIR SHIN ET AL: "Two-stage approach for cooperative multi-vehicle localization using integrated measurements", IET SIGNAL PROCESSING, THE INSTITUTION OF ENGINEERING AND TECHNOLOGY, MICHAEL FARADAY HOUSE, SIX HILLS WAY, STEVENAGE, HERTS. SG1 2AY, UK, vol. 17, no. 4, 24 avril 2023 (2023-04-24), XP006118284, ISSN: 1751-9675, DOI: 10.1049/SIL2.12206 * Section 2.3 * ----- -/-- | 5,7 | |

Le présent rapport a été établi pour toutes les revendications

| Lieu de la recherche | Date d'achèvement de la recherche | Examinateur |
|---|---|---|
| Munich | 20 mai 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 26 15 6046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CN 111 273 687 A (UNIV SHANGHAI JIAOTONG) 12 juin 2020 (2020-06-12) * alinéa [0016] - alinéa [0021] * ----- | 1,5,6 | |
| A | WO 2022/209183 A1 (MITSUBISHI ELECTRIC CORP [JP]) 6 octobre 2022 (2022-10-06) * alinéa [0049] * * alinéa [0118] * ----- | 1,6,8 | |
| A | QUEBE S ET AL: "Cooperative GPS Navigation", PLANS 2010 - PROCEEDINGS OF IEEE/ION PLANS 2010, THE INSTITUTE OF NAVIGATION, 8551 RIXLEW LANE SUITE 360 MANASSAS, VA 20109, USA, 6 mai 2010 (2010-05-06), pages 834-837, XP056019086, * Équations 8-9 * * Section II * ----- | 1,6,9-11 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 20 mai 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**     EP 26 15 6046

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-05-2026

| Document brevet cité au rapport de recherche | | Date de publication | Membre(s) de la famille de brevet(s) | | Date de publication |
|---|---|---|---|---|---|
| CN 111273687 | A | 12-06-2020 | AUCUN | | |
| WO 2022209183 | A1 | 06-10-2022 | CN | 117063090 A | 14-11-2023 |
| | | | EP | 4314900 A1 | 07-02-2024 |
| | | | JP | 7592212 B2 | 29-11-2024 |
| | | | JP | 2024510352 A | 06-03-2024 |
| | | | US | 2022326393 A1 | 13-10-2022 |
| | | | WO | 2022209183 A1 | 06-10-2022 |

EPO FORM P0460

Pour tout renseignement concernant cette annexe : voir Journal Officiel de l'Office européen des brevets, No.12/82